(19) Europäisches Patentamt
European Patent Office
Office européen des brevets

(11) EP 1 044 231 B1

(12) # FASCICULE DE BREVET EUROPEEN

(45) Date de publication et mention de la délivrance du brevet:
**08.10.2003 Bulletin 2003/41**

(21) Numéro de dépôt: **98964531.2**

(22) Date de dépôt: **28.12.1998**

(51) Int Cl.[7]: **C08F 293/00**, C08F 2/38

(86) Numéro de dépôt international:
**PCT/FR98/02891**

(87) Numéro de publication internationale:
**WO 99/035178 (15.07.1999 Gazette 1999/28)**

(54) **PROCEDE DE SYNTHESE DE POLYMERES A BLOCS PAR POLYMERISATION RADICALAIRE CONTROLEE A PARTIR DE COMPOSES DITHIOESTERS**

VERFAHREN ZUR HERSTELLUNG VON BLOCKCOPOLYMEREN DURCH EINE KONTROLLIERTE RADIKALPOLYMERISATION MIT DITHIOESTER

SYNTHESIS METHOD FOR BLOCK POLYMERS BY CONTROLLED RADICAL POLYMERISATION FROM DITHIOESTER COMPOUNDS

(84) Etats contractants désignés:
**DE FR GB**

(30) Priorité: **31.12.1997 FR 9716779**

(43) Date de publication de la demande:
**18.10.2000 Bulletin 2000/42**

(73) Titulaire: **RHODIA CHIMIE**
**92408 Courbevoie Cédex (FR)**

(72) Inventeurs:
- **BOUHADIR, Ghenwa**
**F-91190 Gif sur Yvette (FR)**
- **CHARMOT, Dominique**
**F-93310 Le Pré Saint Gervais (FR)**
- **CORPART, Pascale**
**F-95110 Sannois (FR)**
- **ZARD, Samir**
**F-91190 Gif sur Yvette (FR)**

(74) Mandataire: **Fevrier, Murielle et al**
**Rhodia Services,**
**Direction de la Propriété Industrielle,**
**40, rue de la Haie-Coq**
**93306 Aubervilliers Cedex (FR)**

(56) Documents cités:
**EP-A- 0 348 166**
**WO-A-96/15157**
**WO-A-98/01478**
**US-A- 2 396 997**

- **MOEBIUS M ET AL: "BESCHLEUNIGER FUER CYANACRYLATKLEBSTOFFE" PLASTE UND KAUTSCHUK, vol. 39, no. 4, 1992, page 122/123 XP002046219**
- **PATENT ABSTRACTS OF JAPAN vol. 016, no. 528 (C-1001), 29 octobre 1992 & JP 04 198303 A (SANYO CHEM IND LTD), 17 juillet 1992**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 1 044 231 B1

## Description

La présente invention concerne un nouveau procédé de polymérisation radicalaire donnant accès à des copolymères à blocs.

Les copolymères à blocs sont habituellement préparés par polymérisation ionique. Ce type de polymérisation présente l'inconvénient de ne permettre la polymérisation que de certains types de monomères apolaires, notamment le styrène et le butadiène, et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Au cours de cette polymérisation, les macroradicaux, dotés d'un temps de vie très faible, se recombinent de façon irréversible par couplage ou dismutation. Lorsque la polymérisation se déroule en présence de plusieurs comonomères, la variation de composition du mélange est infiniment faible devant le temps de vie du macroradical de sorte que les chaînes présentent un enchaînement des unités monomères statistique et non un.enchaînement séquencé.

Par conséquent, jusqu'à récemment il n'existait pas de procédé de polymérisation radicalaire permettant d'obtenir des polymères à blocs.

Depuis, un nouveau procédé de polymérisation radicalaire s'est développé : il s'agit de la polymérisation radicalaire dite "contrôlée" ou "vivante". Cette polymérisation radicalaire contrôlée est caractérisée par une terminaison réversible des macroradicaux.

Plusieurs techniques de polymérisation radicalaire contrôlée sont à présent connues, dans lesquelles les extrémités de chaînes de polymères peuvent être réactivées sous forme de radical par scission homolytique de liaison (par exemple C-O, ou C-Halogène).

La polymérisation radicalaire contrôlée présente donc les aspects distinctifs suivants :

1. le nombre de chaînes est fixe pendant toute la durée de la réaction,
2. les chaînes croissent toutes à la même vitesse, ce qui se traduit par :

   - une augmentation linéaire des masses moléculaires avec la conversion,
   - une distribution des masses resserrée,

3. la masse moléculaire moyenne est contrôlée par le rapport molaire monomère / précurseur de chaîne,
4. la possibilité de préparer des copolymères à blocs.

Le caractère contrôlé est d'autant plus marqué que la vitesse de consommation du précurseur est très grande (initiation) devant la vitesse de croissance des chaînes (propagation). Il existe des cas où ce n'est pas toujours vrai et les conditions 1 et 2 ne sont pas observées, néanmoins, il est toujours possible de préparer des copolymères à blocs.

Plusieurs approches ont été décrites pour contrôler la polymérisation radicalaire. La plus couramment citée consiste à introduire dans le milieu des contre-radicaux qui se combinent de façon réversible avec les macroradicaux en croissance, comme par exemple les radicaux nitroxyles (Georges *et al., Macromolecules,* **26,** 2987,(1993)). Cette technique est caractérisée par des température élevées pour labiliser la liaison C-O.

Une autre méthode appelée *Atom Transfer Radical Polymerization* fait appel à des sels de métaux de transition associés à des ligands organiques et un amorçeur constitué généralement d'un halogènure organique ; le contrôle de la polymérisation est rendu possible par l'activation réversible de la liaison C-Halogène (Matyjaszewski K., *PCT WO 96/30421*). Un inconvénient de cette polymérisation est qu'elle nécessite une quantité stoechiométrique de métal par chaîne de polymère.

Otsu (Otsu *et al., Makromol. Chem. Rapid Comm.*, **3,** 127-132,(1982), Otsu *et al. ibid,* **3,**123-140,(1982), Otsu *et al., Polymer Bull.*, **7,**45,(1984), *ibid,* **11,**135,(1984), Otsu *et al, J.Macromol. Sci. Chem.,* **A21,**961,(1984), Otsu *et al., Macromolecules,* **19,**2087,(1989)), a montré que certains sulfures organiques, particulièrement les dithiocarbamates, permettaient sous irradiation UV de faire croître des chaînes-de façon contrôlée, selon le principe :

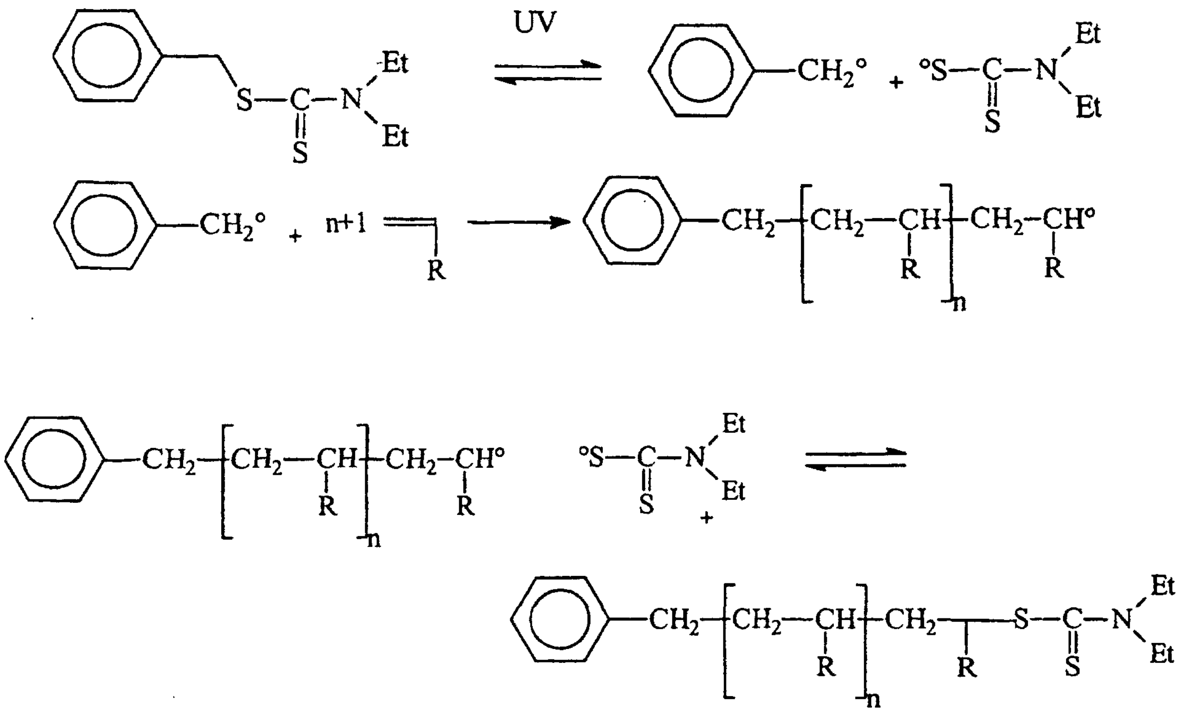


*Réaction 1*

Le principe repose sur la photolyse de la liaison C-S qui régénère le macroradical carboné, d'une part, et le radical dithiocarbamyl, d'autre part. Le caractère contrôlé de la réaction est dû à la réversibilité de la liaison C-S sous irriadiation UV. Il est ainsi possible d'obtenir des copolymères à blocs. En revanche la vitesse d'échange en espèces propageantes et espèces "dormantes" n'est pas très grande par rapport à la vitesse de propagation ce qui a pour conséquence de générer des distributions en masses moléculaires relativement larges. Ainsi, l'indice de dispersion (Ip = Mw/Mn) est compris entre 2 et 5 (Otsu *et al.*, **25,** 7/8,643-650,(1989)).

La polymérisation radicalaire contrôlée présente un avantage sur la polymérisation radicalaire conventionnelle lorsqu'il s'agit de préparer des chaînes de bas poids moléculaires et fonctionnalisées (télomères réactifs). De tels polymères sont recherchés pour des applications spécifiques telles que,. par exemple, revêtements et adhésifs.

Ainsi, lorsque l'on cherche à synthétiser des chaînes greffées avec en moyenne 2 comonomères fonctionnels, la fraction de chaînes avec au plus un site fonctionnel devient importante quand le degré de polymérisation moyen est inférieur à une valeur seuil (e.g. 20 ou 30). La polymérisation radicalaire contrôlée permet, elle, de réduire, voire inhiber, la formation de ces oligomères à zéro ou un site fonctionnel qui dégradent les performances en application.

Un but de la présente invention est de proposer un nouveau procédé de polymérisation radicalaire pour la synthèse de polymères à blocs.

Un autre but est de proposer un procédé de polymérisation radicalaire pour la synthèse de polymères à blocs à partir de tous types de monomères.

Un autre but est de proposer un procédé de polymérisation radicalaire pour la synthèse de polymères et de copolymères à blocs présentant un indice de polydispersité faible.

Un autre but est de proposer un procédé de polymérisation radicalaire pour la synthèse de polymères à blocs ne contenant pas d'impuretés métalliques néfastes à leur utilisation.

Un autre but est de proposer un procédé de polymérisation radicalaire pour la synthèse de copolymères à blocs, lesdits polymères étant fonctionnalisés en bout de chaîne.

Dans ces buts, l'invention concerne un procédé de préparation, par polymérisation radicalaire, de polymères à blocs de formule générale (I) :

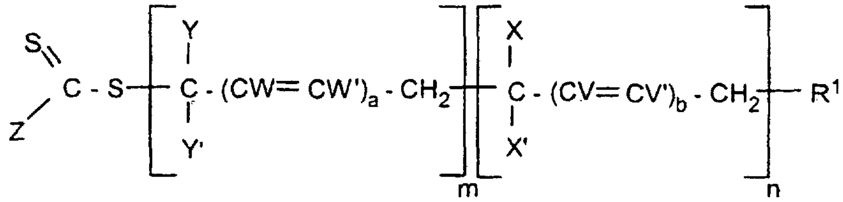

(I)

procédé dans lequel on met en contact :

- un monomère éthyléniquement insaturé de formule $CYY' (= CW - CW')_a = CH_2$,
- un composé précurseur de formule générale (II) :

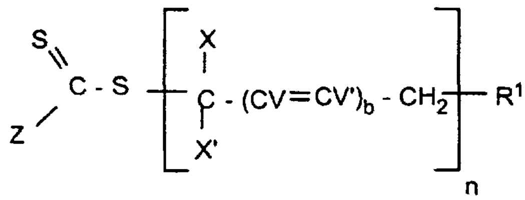

(II)

- un initiateur de polymérisation radicalaire.

L'invention concerne également les polymères à blocs susceptibles d'être obtenus par le procédé ci-dessus, et dont l'indice de polydispersité est d'au plus 2, et plus particulièrement d'au plus 1,5.

Enfin, l'invention est relative à des polymères de formules générales (II) présentant un indice de polydispersité d'au plus 2, et plus particulièrement d'au plus 1,5.

D'autres détails et avantages de l'invention apparaîtront plus clairement à la lecture de la description et des exemples.

L'invention concerne tout d'abord un procédé de préparation, par polymérisation radicalaire, de polymères à blocs de formule générale (I) :

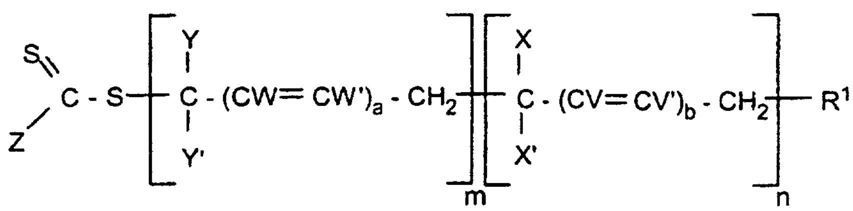

(I)

dans laquelle :

- **Z** est un radical alcène ou alcyne, éventuellement substitué par :

  . un groupe alkyle, acyle, aryle, alcéne ou alcyne éventuellement substitué,
  . un cycle carboné saturé ou non, éventuellement substitué ou aromatique,
  . un hétérocycle saturé ou non, éventuellement substitué,
  . des groupes alkoxycarbonyl ou aryloxycarbonyl (-COOR'), carboxy (-COOH), acyloxy ($-O_2CR'$), carbamoyle ($-CONR'_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR'_2$), halogène, allyle, époxy, alkoxy (-OR'), S-alkyle, S-aryle, organosilyle,
  . des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- **$R^1$** représente :

  . un groupe (i) alkyle, acyle, aryle, alcéne ou alcyne éventuellement substitué, ou
  . un cycle (ii) carboné, saturé ou non, éventuellement substitué ou aromatique, ou
  . un hétérocycle (iii), saturé ou non, éventuellement substitué,
  ces groupes et cycles (i), (ii) et (iii) pouvant être substitués par des groupes phényles substitués ou des groupes aromatiques substitués, des groupes : alkoxycarbonyle ou aryloxycarbonyle (-COOR'), carboxy (-COOH), acyloxy ($-O_2CR'$), carbamoyle ($-CONR'_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR'_2$), halogène, allyle, époxy, alkoxy (-OR'), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), organosilyle,
  R' représentant un groupe alkyle ou aryle,

- **V, V', W et W'**, identiques ou différents, représentent : H, un groupement alkyle, ou un halogène,
- **X, X', Y et Y'**, identiques ou différents, représentent H, un halogène, ou un groupe R", OR", OCOR", NHCOH, OH, $NH_2$, NHR", $N(R")_2$, $H_2N^+O^-$, $(R")_2N^+O^-$, NHCOR", $CO_2H$, $CO_2R"$, CN, $CONH_2$, CONHR" ou $CON(R")_2$, dans lesquels R" est choisi parmi les groupes alkyle, aryle, aralkyle, alkaryle, alcène, organosilyle, éventuellement perfluorés et éventuellement substitués par un ou plusieurs groupes carboxyle, époxy, hydroxyle, alkoxy, amino, halogène, ou sulfonique,
- **a** et **b**, identiques ou différents, valent 0 ou 1,
- **m** et **n**, identiques ou différents, sont supérieurs ou égaux à 1, et lorsque l'un ou l'autre est supérieur à 1, les motifs unitaires répétitifs sont identiques ou différents,

  procédé dans lequel on met en contact :

  - un monomère éthyléniquement insaturé de formule : $CYY' (= CW - CW')_a = CH_2$,
  - un composé précurseur de formule générale (II) :

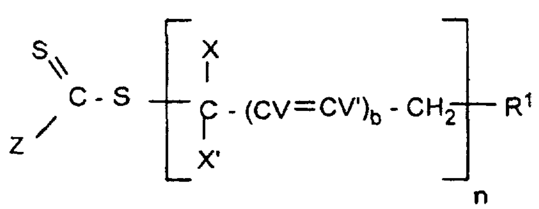

(II)

  - un initiateur de polymérisation radicalaire.

Le procédé consiste à mettre en contact un initiateur de polymérisation radicalaire, un monomère éthyléniquement insaturé et un précurseur de formule générale (II).

L'**initiateur de polymérisation radicalaire** peut être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl peroxyacétate, le t-butyl peroxybenzoate, le t-butyl peroxyoctoate, le t-butyl peroxynéodécanoate, le t-butyl peroxyisobutarate, le peroxyde de lauroyle, le t-amyl peroxypivalate, le t-butyl peroxypivalate, le peroxyde de dicumyle, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis (4-acide pentanoïque), le 1,1'-azobis(cyclohexanecarbonitrile), le 2-(t-butylazo)-2-cyanopropane, le 2,2'-azobis [2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :

  . les mélanges de peroxyde d'hydrogène, d'alkyle, peresters, percarbonates et similaires, et de n'importe lequel

des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs,
- les persulfate de métal alcalin en association avec un acide arylphosphinique, tel que l'acide benzène phosphonique et autres similaires, et des sucres réducteurs.

La quantité d'initiateur à utiliser est déterminée de manière à ce que la quantité de radicaux générés soit d'au plus 20 % en mole par rapport à la quantité de composé (II), de préférence d'au plus 5 % en mole.
Comme **monomère éthyléniquement insaturé,** on utilise plus spécifiquement selon l'invention les monomères choisis parmi le styrène ou ses dérivés, le butadiène, le chloroprène, les esters (méth)acryliques, les esters vinyliques d'acide carboxylique, les amides de la vinylamine, les amides des acides carboxyliques insaturés et les nitriles vinyliques.
Le butadiène et le chloroprène correspondent au cas où a et b égalent 1 dans les formules (I), (II) et dans la formule du monomère précédemment donnée.
Par esters (méth)acryliques, on désigne les esters de l'acide acrylique et de l'acide méthacrylique avec les alcools en $C_1$-$C_{12}$ hydrogénés ou fluorés, de préférence $C_1$-$C_8$. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.
Les nitriles vinyliques incluent plus particulièrement ceux ayant de 3 à 12 atomes de carbone, comme en particulier l'acrylonitrile et le méthacrylonitrile.
Il est à noter que le styrène peut être remplacé en totalité ou en partie par des dérivés tels que l'alphaméthylstyrène ou le vinyltoluène.
Les autres monomères éthyléniquement insaturés, utilisables seuls ou en mélanges, ou copolymérisables avec les monomères ci-dessus sont notamment :

- les esters vinyliques d'acide carboxylique comme l'acétate de vinyle, le versatate de vinyle, le propionate de vinyle,
- les halogénures de vinyle,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides,
- les amides de la vinylamine, notamment le vinylformamide, ou le vinylacétamide,
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylèneméthacrylate,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, la vinylpyrrolidone, les (méth)acrylates d'aminoalkyle et les (méth)acrylamides d'aminoalkyle comme le diméthylaminoéthylacrylate ou -méthacrylate, le ditertiobutylaminoéthyl-acrylate ou -méthacrylate, le diméthylaminométhyl-acrylamide ou -méthacrylamide. Il est de même possible d'utiliser des monomères zwitterioniques comme par exemple l'acrylate de sulfopropyl(diméthyl)aminopropyle.

Pour la préparation des copolymères de formule (I) pour lesquels Y = H et Y' = $NH_2$, on utilise de préférence à titre de monomères éthyléniquement insaturés les amides de la vinylamine, par exemple le vinylformamide ou le vinylacétamide. Puis le copolymère obtenu est hydrolysé à pH acide ou basique.
Pour la préparation des copolymères de formule (I) pour lesquels Y = H et Y' = OH, on utilise de préférence à titre de monomères éthyléniquement insaturés les esters vinyliques d'acide carboxylique, comme par exemple l'acétate de vinyle. Puis le copolymère obtenu est hydrolysé à pH acide ou basique.
Les types et quantités de monomères copolymérisables mis en oeuvre selon la présente invention varient en fonction de l'application finale particulière à laquelle est destiné le polymère à blocs. Ces variations sont bien connues et peuvent être facilement déterminées par l'homme du métier.
Pour que le polymère de formule générale (I) soit un polymère à blocs, le **composé "précurseur" de formule générale (II)** doit être un polymère.
Donc n est strictement supérieur à 1, de préférence supérieur ou égal à 6. Les unités monomères de ce polymère peuvent être identiques ou différentes.

De préférence, dans la formule (II), $R^1$ représente :

- un groupe de formule $CR^{12}R^{13}R^{14}$, dans laquelle :
  - . $R^{12}$, $R^{13}$ et $R^{14}$ représentent des groupes (i), (ii), ou (iii) tels que définis ci-dessus, ou
  - . $R^{12} = R^{13} = H$ et $R^{14}$ est un groupe aryle, alcène, ou alcyne, ou
  - . un groupe $-CO-R^{15}$ dans lequel $R^{15}$ représente un groupe (i), (ii), ou (iii) tels que définis ci-dessus.

De préférence, $R^1$ est un groupement choisi parmi les groupements benzyle et :

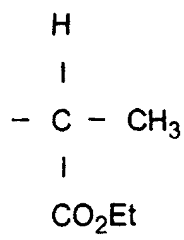

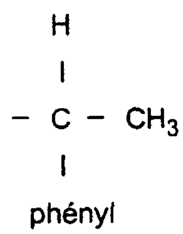

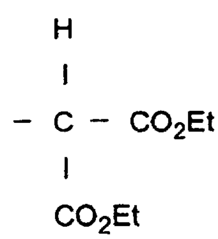

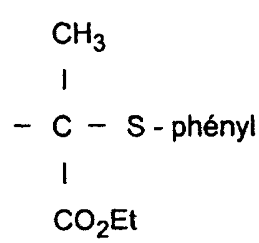

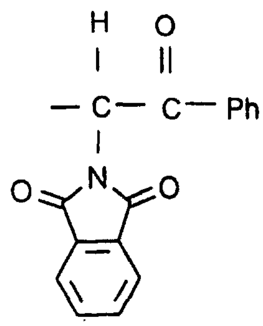

Dans la formule (II), Z est un radical alcène ou alcyne.

Les résultats les plus intéressants ont été obtenus pour les composés de formule (II) dans laquelle Z est un alcène.

Ce polymère précurseur de formule (II) peut être issu de la polymérisation radicalaire d'un monomère éthyléniquement insaturé de formule : CXX'(= CV - CV')$_b$= $CH_2$, par mise en contact dudit monomère avec un initiateur de polymérisation radicalaire et un composé de formule générale (III), (IV) ou(V) :

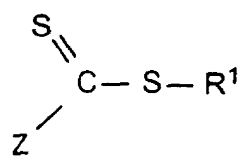

(III)

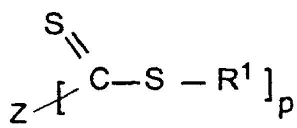

(IV)

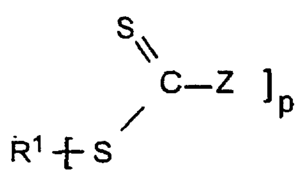

(V)

p étant compris entre 2 et 10, de préférence entre 2 et 5.

Lors de cette synthèse, les initiateurs de polymérisation radicalaire et les monomères éthyléniquement insaturés sont du type de ceux cités précédemment.

Quant aux composés de formules générales (III), (IV) ou (V), les symboles $R^1$ et Z ont la même signification que précédemment. De même, les préférences quant à ses symboles sont les mêmes que précédemment.

Lorsque Z représente un groupe alcène, les composés de formule (III) correspondent à la formule (IIIA) suivante :

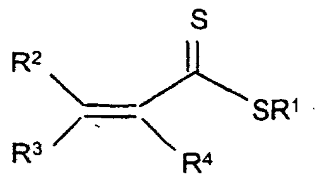 (IIIA)

dans laquelle $R^2$, $R^3$ et $R^4$ représentent :

- un groupe alkyle, acyle, aryle, alcéne ou alcyne éventuellement substitué,
- un cycle carboné saturé ou non, éventuellement substitué ou aromatique,
- un hétérocycle saturé ou non, éventuellement substitué,
- des groupes alkoxycarbonyl ou aryloxycarbonyl (-COOR'), carboxy (-COOH), acyloxy ($-O_2CR'$), carbamoyle ($-CONR'_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR'_2$), halogène, allyle, époxy, alkoxy (-OR'), S-alkyle, S-aryle, organosilyle,
- des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires).

Selon une variante de l'invention, le composé de formule (IIIA) peut être tel que $R^4$ et $R^3$ font partie d'un même cycle carboné ou hétérocyclique, tel que par exemple, le composé suivant :

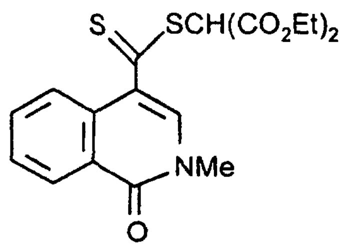

Les composés de formule générale (IIIA), pour laquelle Z représente un alcène, sont facilement accessibles. Ils peuvent notamment être obtenus par réaction d'addition d'un organomagnésien sur un β-oxodithioester. Le β-hydroxydithioester obtenu est ensuite déshydraté pour conduire aux dithioesters α,β éthyléniques de formule générale (IIIA). Un autre mode de préparation de ces composés consiste à réaliser l'addition d'un vinyl magnésien sur le disulfure de carbone, suivie d'une alkylation par un iodure, bromure ou chlorure d'alkyle.

Le procédé complet de synthèse, par polymérisation radicalaire, d'un polymère à blocs de formule générale (I) selon l'invention peut donc consister à :

(1) synthétiser un polymère par mise en contact d'un monomère éthyléniquement insaturé de formule : CXX' (= CV - CV')$_b$ = $CH_2$, d'un initiateur de polymérisation radicalaire et d'un composé de formule (III), (IV) ou (V),
(2) utiliser ce polymère obtenu en tant que précurseur de formule générale (II) pour préparer un polymère dibloc par mise en contact avec un nouveau monomère éthyléniquement insaturé de formule : CYY' (= CW - CW')$_a$ = $CH_2$ et un initiateur de polymérisation radicalaire.

Cette étape (2) peut être répétée autant de fois que voulu avec de nouveaux monomères pour synthétiser de nouveaux blocs et obtenir un polymère multibloc.

Comme indiqué précédemment, pour la préparation des précurseurs de formule (II) pour lesquels X = H et X' = $NH_2$ (étape (1) ci-dessus définie), on utilise de préférence à titre de monomères éthyléniquement insaturés les amides de la vinylamine, par exemple le vinylformamide ou le vinylacétamide. Puis, le polymère obtenu est hydrolysé à pH acide ou basique.

De même, pour la préparation des précurseurs de formule (II) pour lesquels X = H et X' = OH, on utilise de préférence à titre de monomères éthyléniquement insaturés les esters vinyliques d'acide carboxylique, comme par exemple l'acétate de vinyle. Puis le polymère obtenu est hydrolysé à pH acide ou basique.

Selon ce principe, l'invention concerne également un procédé de préparation de polymères multiblocs, dans lequel on répète au moins une fois la mise en oeuvre du procédé précédemment décrit en utilisant :

- des monomères différents de la mise en oeuvre précédente, et
- à la place du composé précurseur de formule (II), le polymère à blocs issu de la mise en oeuvre précédente.

Si on répète la mise en oeuvre une fois, on obtiendra un polymère tribloc, si on le répète une deuxième fois, on obtiendra un polymère "quadribloc", et ainsi de suite. De cette manière, à chaque nouvelle mise en oeuvre, le produit obtenu est un polymère à blocs présentant un bloc polymère supplémentaire.

Donc, pour la préparation de polymères multiblocs, le procédé consiste à répéter plusieurs fois la mise en oeuvre du procédé précédent sur le polymère à blocs issu de chaque mise en oeuvre précédente avec des monomères diférents.

Selon ce procédé de préparation de polymères multiblocs, lorsque l'on souhaite obtenir des polymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Les composés de formule (IV) et (V) sont intéressants car ils permettent de faire croître une chaîne polymère sur au moins deux sites actifs. Avec ce type de composé, il est possible d'économiser des étapes de polymérisation pour obtenir un copolymère à n blocs.

Ainsi, si p vaut 2, le premier bloc est obtenu par polymérisation d'un monomère M1 en présence du composé de formule (IV) ou (V). Ce premier bloc peut ensuite croître à chacune de ses extrémités par polymérisation d'un deuxième monomère M2. Un copolymère tribloc est obtenu, ce polymère tribloc peut, lui-même, croître à chacun de ses extrémités par polymérisation d'un troisième monomère M3. Ainsi, un copolymère "pentabloc" est obtenu en seulement trois étapes.

Si p est supérieur à 2, le procédé permet d'obtenir des homopolymères ou des copolymères à blocs dont la structure est "multi-bras" ou hyperbranchée.

La polymérisation peut être réalisée en masse, en solution ou en émulsion. De préférence, elle est mise en oeuvre en émulsion.

De préférence, le procédé est mis en oeuvre de manière semi-continue.

La température peut varier entre la température ambiante et 150°C selon la nature des monomères utilisés.

En général, au cours de la polymérisation, la teneur instantanée en polymère par rapport à la quantité instantanée en monomère et polymère est comprise entre 50 et 99% en poids, de préférence entre 75 et 99 %, encore plus préférentiellement entre 90 et 99 %. Par polymère, on entend soit le composé de formule (I) pour la synthèse de copolymère à blocs, soit le composé de formule (II) pour la synthèse du polymère précurseur. Cette teneur est maintenue, de manière connue, par contrôle de la température, de la vitesse d'addition des réactifs et de l'initiateur de polymérisation.

Le procédé selon l'invention présente l'avantage de conduire à des polymères à blocs de formule (I) présentant un indice de polydispersité faible.

Il permet également de contrôler la masse moléculaire des polymères.

L'invention concerne donc aussi les polymères à blocs susceptibles d'être obtenus par le procédé précédent.

Ces polymères présentent en général un indice de polydispersité d'au plus 2, de préférence d'au plus 1,5.

Les polymères à blocs préférés sont ceux présentant au moins deux blocs polymères choisis parmi les associations suivantes :

- polystyrène/polyacrylate de méthyle,
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate de tertiobutyle/polyacétate de vinyle.

Selon un mode particulier, l'invention concerne également le procédé de préparation de polymères à blocs, par polymérisation radicalaire, dans lequel dans une première étape, on met en contact :

- un monomère éthyléniquement insaturé de formule : $CXX' (= CV - CV')_b = CH_2$
- un composé de formule générale (IIIA) :

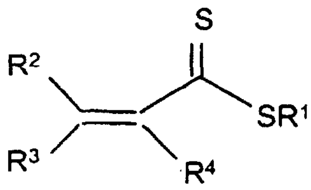

dans laquelle au moins $R^2$ ou $R^3$ représente un groupe $SR^1$, identiques ou différents, et

- un initiateur de polymérisation radicalaire,

puis on répète au moins une fois la mise en oeuvre de la première étape en utilisant :

- des monomères différents de la première étape, et
- à la place du composé de formule (IIIA), le polymère issu de la mise en oeuvre précédente.

Selon ce mode particulier de l'invention, les groupes $R^2$ et/ou $R^3$ représentent des groupes S-alkyle : -SR. Lorsque le radical alkyle R de ce groupe S-alkyle est un radical stabilisé, répondant à la définition du groupe $R^1$ telle que donnée précédemment, le composé précurseur de formule (IIIA) présente l'avantage de permettre la polymérisation radicalaire vivante sur toutes les extrémités du composé (IIIA) portant des groupes $-SR^1$. Par exemple, si $R^2$ et $R^3$ représentent un groupe $-SR^1$, identiques ou différents, c'est-à-dire si le composé précurseur répond à la formule (IIIB) suivante :

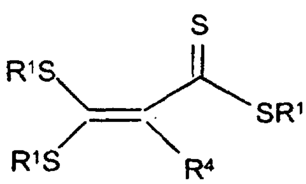
(IIIB)

le polymère suivant pourra être obtenu :

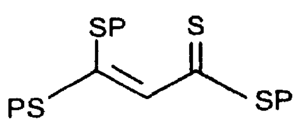

P représentant la chaîne polymère.

On peut également envisager le cas où seul $R^2$ (ou $R^3$) est un groupe de type-$SR^1$, dans ce cas, la polymérisation pourra se faire sur deux extrémités du composé précurseur de formule (III).

Selon ce mode particulier de l'invention, les composés de formule (IIIA) peuvent être choisis parmi les composés de formules suivantes, dans lesquelles les groupes $R^1$, identiques ou différents, sont définis tels que précédemment :

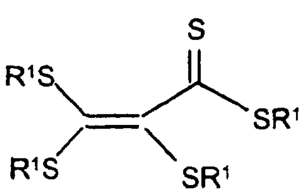

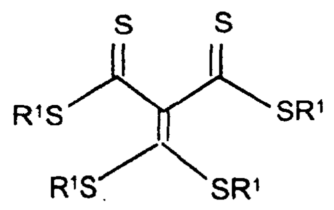

et notamment :

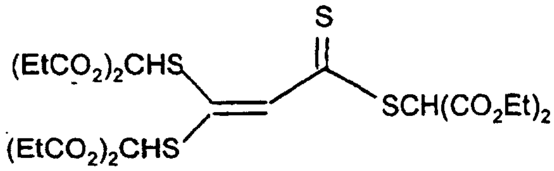

Comme indiqué précédemment, ces composés de formule (IIIA) peuvent être tels que $R^4$ et $SR^1$ ou $R^4$ et $R^3$ font partie d'un même cycle carboné ou hétérocyclique, tel que par exemple, les composé suivants :

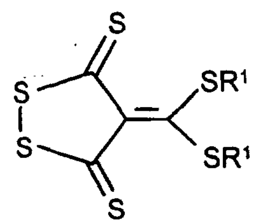

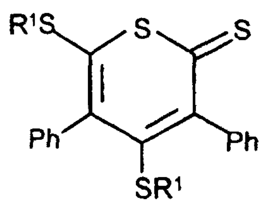

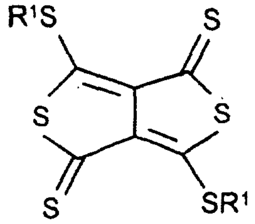

et plus particulièrement :

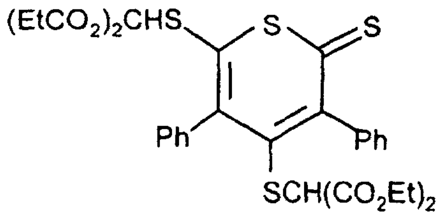

L'invention concerne également les polymères susceptibles d'être obtenus par ce mode particulier. Ces polymères présentent généralement un indice de polydispersité d'au plus 2, voire d'au plus 1,5.
Enfin, le procédé de synthèse des polymères précurseurs de formule générale (II) permet également de synthétiser des polymères présentant un faible indice de polydispersité. Ces polymères précurseurs présentent, en général, un indice de polydispersité d'au plus 2, de préférence d'au plus 1,5.
De préférence, n supérieur ou égal à 6.
Les exemples suivants illustrent l'invention sans toutefois en limiter la portée.

**EXEMPLES**

**1. SYNTHESE DES COMPOSES PRECURSEURS DE FORMULE (III)**

**Exemple 1.1 : Synthèse d'un dithioester de formule (IIIA)**

On synthéthise le dithioester de formule (IIIA) suivante :

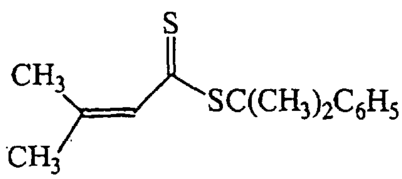

Le procédé est tiré de la référence S. Masson, A. Thuiller, *Tetrahedron Letters*, vol. 23, 4087-4090. Ainsi, le 3-oxo butanedithioate de cumyle est traité par 3 équivalents de $CH_3Li$ à -10°C, puis le produit obtenu est hydrolysé en milieu chlorhydrique. Le produit de réaction est ensuite traité par de l'acide paratoluène sulfonique (0,5 eq.) au reflux du toluène. Le produit purifié par chromatographie sur gel de silice (éluant : éther de pétrole). Le rendement est de 40 %.

**Exemple 1.2 : Synthèse du dithioester de formule (IIIA)**

On synthéthise le dithioester de formule (IIIA) suivante :

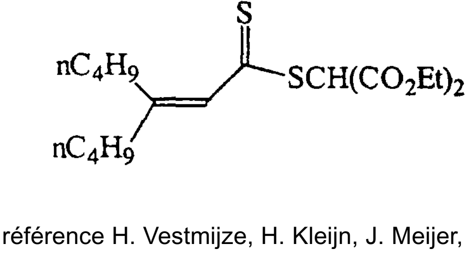

Le procédé est tiré de la référence H. Vestmijze, H. Kleijn, J. Meijer, P. Vermeer, *Synthesis,* 1979, 432-434. Ainsi, on prépare une suspension de $(n\text{-}C_4H_9)_2C{=}CHMgBr$ (1 eq.) dans du THF en présence de Cu(I)Br (0,07 eq.). Puis, on ajoute un équivalent de $CS_2$ à -50°C. Le produit de réaction est ensuite alkylé avec 1,3 équivalent de bromomalonate de diéthyle. Le dithioester obtenu est isolé par extraction et distillation. Le rendement est de 30 %.

**Exemple 1.3 : Synthèse du dithioester de formule (IIIA)**

On synthéthise le dithioester de formule (IIIA) suivante :

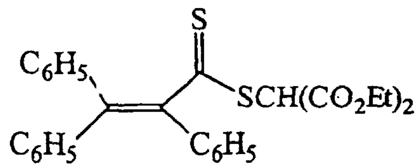

Le dérivé organomagnésien issu du triphénylbromoethylène (1 eq.) est traité avec $CS_2$ (1eq.) à -50°C en présence de Cu(I)Br (0,1 eq.). Le milieu est ramené à -20°C et traité par 0,5 eq. de chloromalonate de diéthyle. Après hydrolyse, extraction et lavage, le produit est isolé sur colonne chromatographique de silice (éluant: heptane/acétate d'éthyle dans un rapport 9/1). Le rendement est de 12 %.

**Exemple 1.4 : Synthèse du dithioester de formule (IIIA)**

On synthéthise le dithioester de formule (IIIA) suivante :

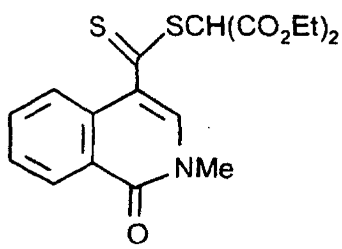

Le procédé est tiré de la référence G. Kobayashi, Y. Matsuda, Y. Tominaga, K. Mizuyama, Chem. Pharm. Bull., vol. 23, 2749-2758 (1975). Le procédé est le suivant :

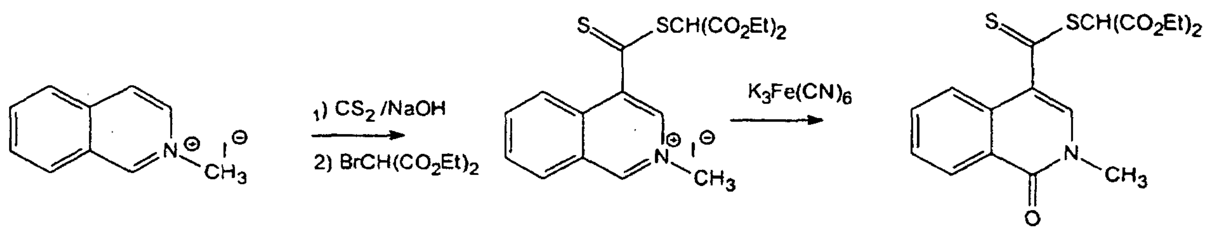


On traite 1 équivalent d'iodure de N-méthyl quinolinium dans le diméthyl sulfoxyde par 2 équivalents de $CS_2$ en présence de NaOH en poudre. Le dithiocarboxylate est isolé par filtration, puis il est traité en mileu méthanolique en présence de bromomalonate de diéthyle. Le solide ainsi obtenu est recristallisé dans le méthanol. Le dithiocarboxylate est ensuite oxydé dans l'acétone en présence de $K_3Fe(CN)_6$ et de NaOH ; le produit de réaction est reprécipité dans l'eau et recristallisé dans le méthanol. Le rendement est de 35 %.

**Exemple 1.5 : Synthèse du dithioester de formule (IIIB)**

On synthéthise le dithioester de formule (IIIB) suivante :

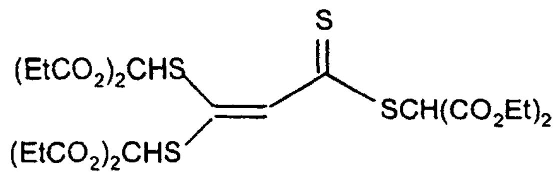

Le procédé est tiré de la référence K. Hartke , N. Rettberg, *Tetrahedron* Letters, 1991, 32, 4679.

On traite un équivalent d'acide dithioacétique avec 2 équivalents du sel lithien de l'hexaméthyldisilazane (Li (HMDS)). La température est amenée à -78°C puis $CS_2$ (1eq.) est ajouté ; le milieu est amené à température ambiante pour former le produit de C-addition. Li(HMDS) (1eq.) est ajouté pour obtenir le trianion qui est à son tour trialkylé avec du bromomalonate de diéthyle.

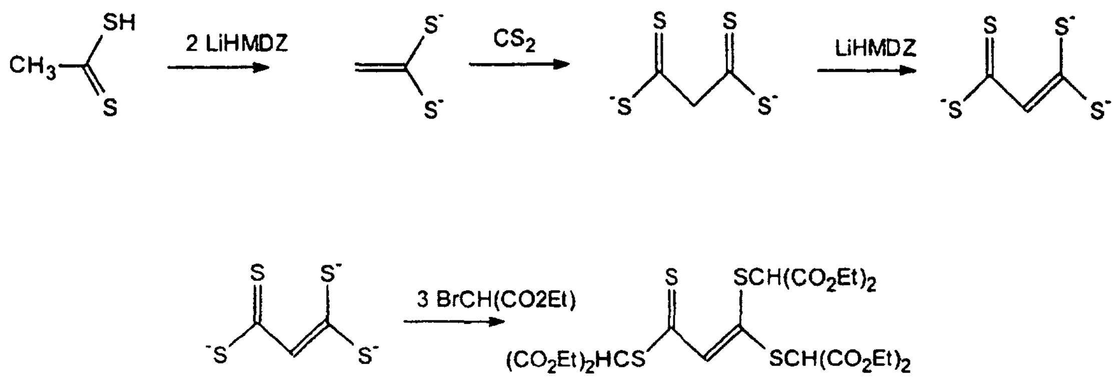


**Exemple 1.6 : Synthèse d'un dithioester de formule (IIIB)**

On synthéthise le dithioester de formule (IIIB) suivante :

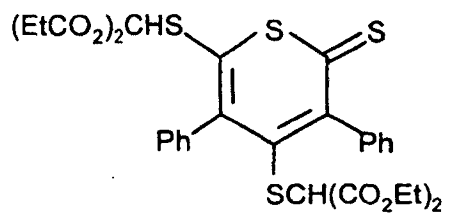

Le composé est préparé par une modification de la procédure décrite par H. J. Teague et W. P. Tucker, J. Org. Chem. 1967, 32, 3140-3144) en remplaçant l'agent alkylant par une quantité équivalente de chloromalonate de diéthyle (rendement global 27 %)

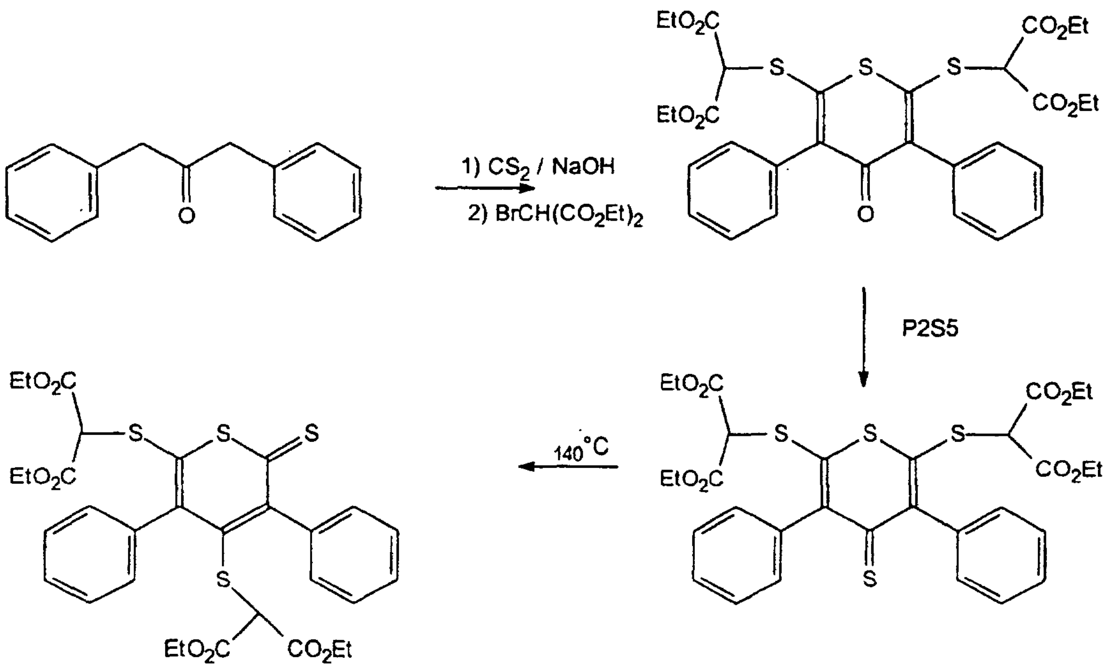


## 2. PREPARATION DES HOMOPOLYMERES DE FORMULE (II)

Ces exemples démontrent que la polymérisation radicalaire est contrôlée grâce à l'utilisation de précurseurs de formule générale (III). Le contrôle de la réaction apparaît au travers des valeurs des indices de polymolécularité Ip=Mw/Mn , inférieurs à 1,5, et des valeurs de masse moléculaire en nombre Mn, proches des valeurs théoriques et exprimées par la formule suivante :

$$Mn = \frac{Mm}{Mp}\,\frac{X}{100}\,Mmol$$

avec :

Mm : mole(s) de monomère
Mp : mole(s) de précurseur de formule (III)
X : conversion du monomère (%)
Mmol : masse molaire du monomère (g/mol)

Dans les exemples ci-dessous les (co)polymères sont analysés en GPC avec le THF comme solvant d'élution ; les masses moléculaires sont exprimées en équivalents polystyrène (g/mol).

**Exemple 2.1 : homopolymère de l'acrylate d'éthyle**

On introduit dans un tube de verre:

- 0,003 mmol (0,6 mg) d'azo-bis isobutyronitrile (AIBN),
- 10 mmol (1 g) d'acrylate d'éthyle, et
- 0,13 mmol (32,5 mg) du précurseur de l'exemple 1.1.

Le tube est connecté à une rampe à vide, plongé dans l'azote liquide, puis trois cycles "congélation / vide / retour à l'ambiante" sont effectués sur le contenu du tube afin de le dégazer. Le tube est ensuite scellé sous vide. Après retour à l'ambiante, il est immergé dans un bain d'huile préchauffé à 80°C.
La polymérisation dure 28 heures.
Le polymère est récupéré par ouverture du tube puis évaporation des traces de monomère résiduel, puis

analysé par GPC Les résultats sont les suivants :

- taux de conversion : 65 %
- masse molaire moyenne en nombre Mn = 5500
- indice de polydispersité Ip = 1,24

**Exemple 2.2 : homopolymère de l'acrylate d'éthyle**

On introduit dans un tube de verre :

- 0,003 mmol (0,6 mg) d'AIBN,
- 10 mmol (1 g) d'acrylate d'éthyle, et
- 0,13 mmol (48,6 mg) du précurseur de l'exemple 1.2.

Après remplissage, le tube est dégazé et scellé sous vide de manière analogue à l'exemple 2.1.
La polymérisation dure 32 heures à 80°C.
Le polymère est récupéré par évaporation des traces de monomère résiduel et analysé par G.P.C. Les résultats sont les suivants :

- taux de conversion : 72 %
- masse molaire moyenne en nombre Mn = 5250
- indice de polydispersité Ip = 1,28

**Exemple 2.3 : homopolymère de l'acrylate de butyle**

On introduit dans un tube de verre :

- 0,003 mmol (0,6 mg) d'AIBN,
- 15 mmol (1,92 g) d'acrylate de butyle, et
- 0,1 mmol (25 mg) du précurseur de l'exemple 1.1.

Après remplissage, le tube est dégazé et scellé sous vide de manière analogue à l'exemple 2.1.
La polymérisation dure 35 heures à 80°C.
Le polymère est récupéré par évaporation des traces de monomère résiduel et analysé par G.P.C. Les résultats sont les suivants :

- taux de conversion : 70 %
- masse molaire moyenne en nombre Mn = 12500
- indice de polydispersité Ip = 1,19

**Exemple 2.4 : homopolymère de l'acrylate d'éthyle**

On introduit dans un tube de verre :

- 0,003 mmol (0,6 mg) d'AIBN,
- 10 mmol (1 g) d'acrylate d'éthyle, et
- 0,13 mmol (62 mg) du précurseur de l'exemple 1.3.

Après remplissage, le tube est dégazé et scellé sous vide de manière analogue à l'exemple 2.1.
La polymérisation dure 48 heures à 80°C.
Le polymère est récupéré par évaporation des traces de monomère résiduel et analysé par G.P.C. Les résultats sont les suivants :

- taux de conversion : 23%
- masse molaire moyenne en nombre Mn = 1500
- indice de polydispersité Ip = 1,21

**Exemple 2.5 : homopolymère de l'acrylate d'éthyle**

On introduit dans un tube de verre :

- 0,003 mmol (0,6 mg) d'AIBN,
- 10 mmol (1 g) d'acrylate d'éthyle, et
- 0,13 mmol (45,6 mg) du précurseur de l'exemple 1.4.

Après remplissage, le tube est dégazé et scellé sous vide de manière analogue à l'exemple 2.1.
La polymérisation dure 23 heures à 80°C.
Le polymère est récupéré par évaporation des traces de monomère résiduel et analysé par G.P.C. Les résultats sont les suivants :

- taux de conversion : 55 %
- masse molaire moyenne en nombre Mn = 4100
- indice de polydispersité Ip = 1,19

**Exemple 2.6 : homopolymère du styrène**

On introduit dans un tube de verre :

- 9,6 mmol (1 g) de styrène, et
- 0,12 mmol (30 mg) du précurseur de l'exemple 1.1.

Après remplissage, le tube est dégazé et scellé sous vide de manière analogue à l'exemple 2.25.
La polymérisation dure 72 heures à 110°C.
Le polymère est récupéré par évaporation des traces de monomère résiduel et analysé par G.P.C. Les résultats sont les suivants :

- taux de conversion : 85 %
- masse molaire moyenne en nombre Mn = 7500
- indice de polydispersité Ip = 1,15

**Exemple 2.7: homopolymère du styrène**

On introduit dans un tube de verre :

- 9,6 mmol (1 g) de styrène, et
- 0,12 mmol (77 mg) du précurseur de l'exemple 1.5.

Après remplissage, le tube est dégazé et scellé sous vide de manière analogue à l'exemple 2.1.
La polymérisation dure 72 heures à 110°C.
Le polymère est récupéré par évaporation des traces de monomère résiduel et analysé par G.P.C. Les résultats sont les suivants :

- taux de conversion : 75 %
- masse molaire moyenne en nombre Mn = 4200
- indice de polydispersité Ip = 1,28

**Exemple 2.8 : homopolymère du styrène**

On introduit dans un tube de verre :

- 9,6 mmol (1 g) de styrène et
- 0,12 mmol (63 mg) du précurseur de l'exemple 1.6.

Après remplissage, le tube est dégazé et scellé sous vide de manière analogue à l'exemple 2.1. La polymérisation dure 72 heures à 110°C.

Le polymère est récupéré par évaporation des traces de monomère résiduel et analysé par G.P.C. Les résultats sont les suivants :

- taux de conversion : 80 %
- masse molaire moyenne en nombre Mn = 4600
- indice de polydispersité Ip = 1,35

**3 - SYNTHESE DE COPOLYMERES A BLOCS DE FORMULE (I)**

**Exemple 3.1 : copolymère à bloc p(AEt-b-St)**

On prépare une solution mère à partir de :

- 4 g d'acrylate d'éthyle,
- 0,175 g de précurseur de l'exemple 1.1, et
- 8,8 mg d'AIBN.

On introduit 1,06 g de cette solution dans un ballon. La température est portée à 70°C. La polymérisation dure 24 heures au bout desquelles les traces de monomère résiduel sont éliminées par évaporation.

Une petite fraction du polymère obtenu est prélevée et analysée en GPC :

- taux de conversion : 76 %
- masse moléculaire moyenne Mn = 5300,
- indice de polydispersité Ip = 1,21

On introduit dans le ballon :

- 2,08 g de styrène, et
- 4,4 mg d'AIBN.

La température est portée à 70°C. La polymérisation dure 40 heures.

Les traces de monomère résiduel sont éliminées par évaporation et le copolymère est analysé par GPC :

- taux de conversion : 91 %;
- masse moléculaire moyenne Mn = 19 000 ,
- indice de polydispersité Ip = 1,19

**Exemple 3.1 : copolymère à bloc p(St-b-ABu)**

On prépare une solution mère à partir de :

- 5,1 g de styrène,
- 0,175 g de précurseur de l'exemple 1.1, et
- 10 mg d'AIBN.

On introduit 1 g de cette solution dans un ballon. La température est portée à 70°C. La polymérisation dure 24 heures au bout desquelles les traces de monomère résiduel sont éliminées par évaporation.

Une petite fraction du polymère obtenu est prélevée et analysée en GPC :

- taux de conversion : 82 %
- masse moléculaire moyenne Mn = 6000
- indice de polydispersité Ip = 1,23

On introduit dans le ballon :

- 1g d'acrylate de butyle
- 4,4 mg d'AIBN.

La température est portée à 70°C. La polymérisation dure 40 heures.

Les traces de monomère résiduel sont éliminées par évaporation et le copolymère est analysé par GPC :

- taux de conversion : 95 %,
- masse moléculaire moyenne Mn = 12200
- indice de polydispersité Ip = 1,31

## Revendications

1. Procédé de préparation, par polymérisation radicalaire, de polymères à blocs de formule générale (I) :

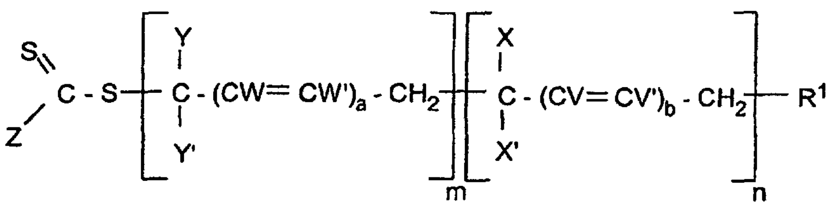

(I)

dans laquelle :

- **Z** est un radical alcène ou alcyne, éventuellement substitué par :
  . un groupe alkyle, acyle, aryle, alcéne ou alcyne éventuellement substitué,
  . un cycle carboné saturé ou non, éventuellement substitué ou aromatique,
  . un hétérocycle saturé ou non, éventuellement substitué,
  . des groupes alkoxycarbonyl ou aryloxycarbonyl (-COOR'), carboxy (-COOH), acyloxy ($-O_2CR'$), carbamoyle ($-CONR'_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR'_2$), halogène, allyle, époxy, alkoxy (-OR'), S-alkyle, S-aryle, organosilyle,
  . des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- **$R^1$** représente :
  . un groupe (i) alkyle, acyle, aryle, alcéne ou alcyne éventuellement substitué, ou
  . un cycle (ii) carboné, saturé ou non, éventuellement substitué ou aromatique, ou
  . un hétérocycle (iii), saturé ou non, éventuellement substitué,
  ces groupes et cycles (i), (ii) et (iii) pouvant être substitués par des groupes phényles substitués ou des groupes aromatiques substitués, des groupes : alkoxycarbonyle ou aryloxycarbonyle (-COOR'), carboxy (-COOH), acyloxy ($-O_2CR'$), carbamoyle ($-CONR'_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR'_2$), halogène, allyle, époxy, alkoxy (-OR'), S-alkyle, S-aryle, organosilyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
  R' représentant un groupe alkyle ou aryle,

  - **V, V', W et W'**, identiques ou différents, représentent : H, un groupement alkyle, ou un halogène,
  - **X, X', Y et Y'**, identiques ou différents, représentent H, un halogène, ou un groupe R", OR", OCOR", NHCOH, OH, $NH_2$, NHR", $N(R")_2$, $N(R")_2$, $H_2N^+O^-$, $(R")_2N^+O^-$, NHCOR", $CO_2H$, $CO_2R"$, CN, $CONH_2$, CONHR" ou $CON(R")_2$, dans lesquels R" est choisi parmi les groupes alkyle, aryle, aralkyle, alkaryle, alcène, organosilyle, éventuellement perfluorés et éventuellement substitués par un ou plusieurs groupes carboxyle, époxy, hydroxyle, alkoxy, amino, halogène, ou sulfonique,
  - **a** et **b,** identiques ou différents, valent 0 ou 1,

- **m** et **n,** identiques ou différents, sont supérieurs ou égaux à 1, et lorsque l'un ou l'autre est supérieur à 1, les motifs unitaires répétitifs sont identiques ou différents,

procédé dans lequel on met en contact :

- un monomère éthyléniquement insaturé de formule : $CYY' (= CW - CW')_a = CH_2$,
- un composé précurseur de formule générale (II) :

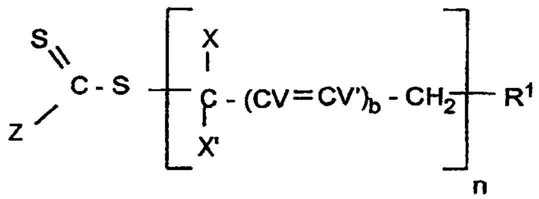

(II)

- un initiateur de polymérisation radicalaire.

2. Procédé selon la revendication 1, **caractérisé en ce que** le monomère éthyléniquement insaturé est choisi parmi : le styrène ou ses dérivés, le butadiène, le chloroprène, les esters (méth)acryliques, les esters vinyliques d'acide carboxylique, les amides de la vinylamine, les amides des acides carboxyliques insaturés et les nitriles vinyliques.

3. Procédé selon l'une quelconque des revendications précédentes, **caractérisé en ce que** $R^1$ représente :

   - un groupe de formule $CR^{12}R^{13}R^{14}$, dans laquelle :

     . $R^{12}$, $R^{13}$ et $R^{14}$ représentent des groupes (i), (ii) ou (iii) tels que définis ci-dessus, ou
     . $R^{12} = R^{13} = H$ et $R^{14}$ est un groupe aryle, alcène ou alcyne, ou

   - un groupe $-COR^{15}$ dans lequel $R^{15}$ représente un groupe (i), (ii) ou (iii).

4. Procédé selon la revendication précédente, **caractérisé en ce que** $R^1$ est un groupement choisi parmi les groupements :

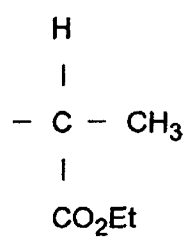

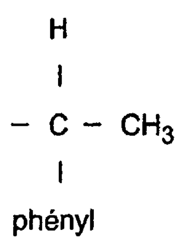

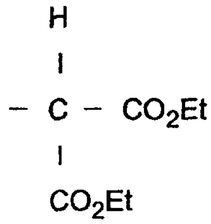

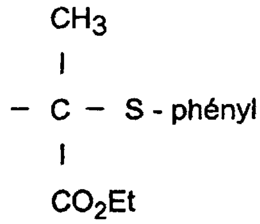

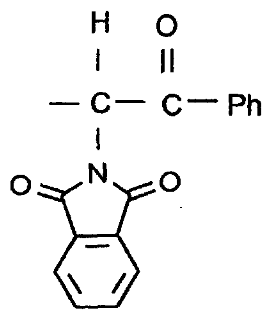

5. Procédé selon l'une quelconque des revendications précédentes, **caractérisé en ce que** le composé précurseur de formule générale (II) est un polymère, et **en ce que** ledit polymère est issu de la polymérisation radicalaire d'un monomère éthyléniquement insaturé de formule : CXX' (= CV - CV')$_b$ = $CH_2$ au cours de laquelle ledit monomère est mis en contact avec un initiateur de polymérisation radicalaire, et un composé de formule générale (III) :

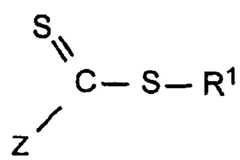

(III)

p étant compris entre 2 et 10.

6. Procédé de préparation par polymérisation radicalaire d'homoplymères ou de copolymères à blocs dont la structure est « multi-bras » ou hyperbranchée dans lequel on met en contact :

- un monomère éthyléniquement insaturé de formule : CYY' (= CW - CW')$_a$ = $CH_2$,
- un composé précurseur de formule générale (II) :

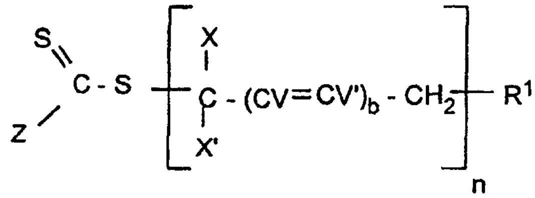

(II)

- un initiateur de polymérisation radicalaire,
  le composé précurseur de formule générale (II) étant obtenu par la réaction de polymérisation radicalaire d'un monomère éthyléniquement insaturé de formule : CXX' (= CV - CV')$_b$ = $CH_2$ au cours de laquelle ledit monomère est mis en contact avec un initiateur de polymérisation radicalaire, et un composé de formule générale (IV) ou (V) :

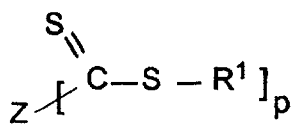

(IV)

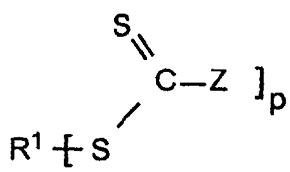

(V)

- p étant compris entre 2 et 10,
- **Z** est un radical alcène ou alcyne, éventuellement substitué par :

  . un groupe alkyle, acyle, aryle, alcéne ou alcyne éventuellement substitué,
  . un cycle carboné saturé ou non, éventuellement substitué ou aromatique,
  . un hétérocycle saturé ou non, éventuellement substitué,
  . des groupes alkoxycarbonyl ou aryloxycarbonyl (-COOR'), carboxy (-COOH), acyloxy (-$O_2$CR'), carbamoyle (-CONR'$_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR'$_2$), halogène, allyle, époxy, alkoxy (-OR'), S-alkyle, S-aryle, organosilyle,
  . des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),

- **$R^1$** représente :

  . un groupe (i) alkyle, acyle, aryle, alcéne ou alcyne éventuellement substitué, ou
  . un cycle (ii) carboné, saturé ou non, éventuellement substitué ou aromatique, ou
  . un hétérocycle (iii), saturé ou non, éventuellement substitué,
  ces groupes et cycles (i), (ii) et (iii) pouvant être substitués par des groupes phényles substitués ou des groupes aromatiques substitués, des groupes : alkoxycarbonyle ou aryloxycarbonyle (-COOR'), carboxy (-COOH), acyloxy (-$O_2$CR'), carbamoyle (-CONR'$_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR'$_2$), halogène, allyle, époxy, alkoxy (-OR'), S-alkyle, S-aryle, organosilyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
  R' représentant un groupe alkyle ou aryle,

- **V, V', W et W'**, identiques ou différents, représentent : H, un groupement alkyle, ou un halogène,
- **X, X', Y et Y'**, identiques ou différents, représentent H, un halogène, ou un groupe R", OR", OCOR", NHCOH, OH, $NH_2$, NHR", $N(R")_2$, $N(R")_2$, $H_2N^+O^-$, $(R")_2N^+O^-$, NHCOR", $CO_2H$, $CO_2R"$, CN, $CONH_2$, CONHR" ou CON $(R")_2$, dans lesquels R" est choisi parmi les groupes alkyle, aryle, aralkyle, alkaryle, alcène, organosilyle, éventuellement perfluorés et éventuellement substitués par un ou plusieurs groupes carboxyle, époxy, hydroxyle, alkoxy, amino, halogène, ou sulfonique,
- **a** et **b**, identiques ou différents, valent 0 ou 1,
- **n** est supérieur ou égal à 1,

**7.** Procédé de préparation de polymères à blocs, **caractérisé en ce qu'**on répète au moins une fois la mise en oeuvre du procédé selon l'une des revendications 1 à 6 en utilisant :

- des monomères différents de la mise en oeuvre précédente, et
- à la place du composé précurseur de formule (II) le polymère à blocs issu de la mise en oeuvre précédente.

**8.** Polymère à blocs susceptible d'être obtenu par le procédé selon l'une quelconque des revendications 1 à 6 ou 7.

**9.** Polymère à blocs selon la revendication précédente, **caractérisé en ce qu'**il présente un indice de polydispersité d'au plus 2.

**10.** Polymère à blocs selon la revendication précédente, **caractérisé en ce qu'**il présente un indice de polydispersité d'au plus 1,5.

**11.** Procédé de préparation de polymères à blocs, par polymérisation radicalaire, dans lequel, dans une première étape, on met en contact :

- un monomère éthyléniquement insaturé de formule : CXX' (= CV - CV')$_b$ = $CH_2$
- un composé de formule générale (IIIA) :

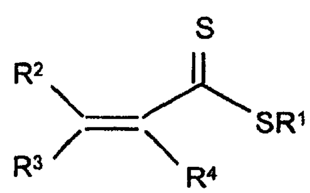

dans laquelle au moins $R^2$ ou $R^3$ représente un groupe $SR^1$, identiques ou différents, et

- un initiateur de polymérisation radicalaire,
  puis on répète au moins une fois la mise en oeuvre de la première étape en utilisant :

- des monomères différents de la première étape, et
- à la place du composé de formule (IIIA), le polymère issu de la mise en oeuvre précédente.

**12.** Polymère à blocs susceptibles d'être obtenus par le procédé selon la revendication 11.

**13.** Polymère à blocs selon la revendication précédente, **caractérisé en ce qu'**il présente un indice de polydispersité d'au plus 2.

**14.** Polymère à blocs selon la revendication précédente, **caractérisé en ce qu'**il présente un indice de polydispersité d'au plus 1,5.

**15.** Polymère susceptible d'être obtenu par le procédé qui consiste à mettre en contact un monomère éthyléniquement insaturé de formule : CXX' (= CV - CV')$_b$ = $CH_2$, un initiateur de polymérisation radicalaire et un composé de formule (III), (IV) ou (V).

## Patentansprüche

**1.** Verfahren zur Herstellung von Blockpolymeren der allgemeinen Formel (1) durch radikalartige Polymerisation:

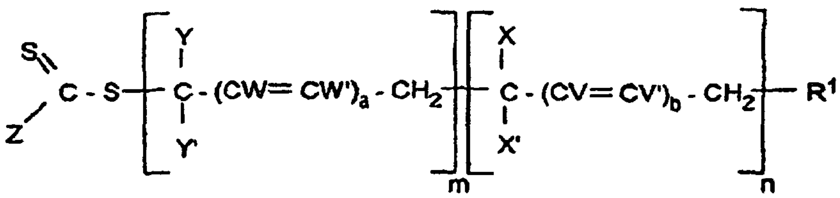

(I)

worin:

- Z ein Alken- oder Alkynrest ist, gegebenenfalls substituiert mit:
  - einer Alkyl-, Acyl-, Aryl-, Alken- oder Alkyngruppe, gegebenenfalls substituiert,
  - einem gesättigten oder ungesättigten Kohlenstoffring, gegebenenfalls substituiert oder aromatisch,
  - einem gesättigten oder ungesättigten Heterocyclus, gegebenenfalls substituiert,
  - Alkoxycarbonyl- oder Aryloxycarbonyl- (-COOR'), Carboxy- (-COOH), Acyloxy- ($-O_2CR'$), Carbamoyl- ($CONR'_2$), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidino-, Hydroxy- (OH), Amino- ($-NR'_2$), Halogen-, Allyl-, Epoxy-, Alkoxy- (-OR'), S-Alkyl-, S-Aryl-, Organosilyl-Gruppen,
  - Gruppen, die eine hydrophile oder ionische Eigenschaft aufweisen wie die alkalischen Carbonsäuresalze, die alkalischen Sulfonsäuresalze, die Polyalkylenoxidketten (POE, POP), die kationischen Substituenten (quatemäre Ammoniumsalze),

- $R^1$ darstellt:
  - eine Alkyl-, Acyl-, Aryl-, Alken- oder Alkyngruppe (i), gegebenenfalls substituiert, oder
  - einen gesättigten oder ungesättigten Kohlenstoffring (ii), gegebenenfalls substituiert oder aromatisch,
  - einen gesättigten oder ungesättigten Heterocyclus (iii), gegebenenfalls substituiert,
    wobei die Gruppen und Cyclen (i), (ii) und (iii) mit substituierten Phenylgruppen oder substituierten aromatischen Gruppen, mit Alkoxycarbonyl- oder Aryloxycarbonyl- (-COOR'), Carboxy- (-COOH), Acyloxy- ($-O_2CR'$), Carbamoyl- ($CONR'_2$), Cyano- (-CN), Alkylcarbonyl-, Alkylarylcarbonyl-, Arylcarbonyl-, Arylalkylcarbonyl-, Phthalimi-do-, Maleimido-, Succinimido-, Amidino-, Guanidino-, Hydroxy- (OH), Amino- ($-NR'_2$), Halogen-, Allyl-, Epoxy-, Alkoxy- (-OR'), S-Alkyl-, S-Aryl-, Organosilyl-Gruppen, mit Gruppen, die eine hydrophile oder ionische Eigenschaft aufweisen wie die alkalischen Carbonsäuresalze, die alkalischen Sulfonsäuresalze, die Polyalkylenoxidketten (POE, POP), die kationischen Substituenten (quaternäre Ammoniumsalze), substituiert sein können,
  - R' eine Alkyl- oder Aryl-Gruppe darstellt,

- V, V', W und W', die gleich oder verschieden sind, H, eine Alkyl-Gruppe oder ein Halogen darstellen,
- X, X', Y und Y', die gleich oder verschieden sind, H, ein Halogen oder eine R"-, OR"-, OCOR"-, NHCOH-, OH-, $NH_2$-, NHR"-, $N(R")_2$-, $H_2N^+O^-$-, $(R")_2N^+O^-$-, NHCOR"-, $CO_2H$-, $CO_2R"$-, CN-, $CONH_2$-, CONHR"- oder CON $(R")_2$-Gruppe darstellen, worin R" ausgewählt ist aus den Alkyl-, Aryl-, Aralkyl-, Alkaryl-, Alken-, Organosilyl-Gruppen, gegebenenfalls perfluoriert und gegebenenfalls mit einer oder mehreren Carboxyl-, Epoxy-, Hydroxyl-, Alkoxy-, Amino-, Halogen- oder Sulfon-Gruppen substituiert;
- a und b, die gleich oder verschieden sind, weisen einen Wert von 0 oder 1 auf,
- m und n, die gleich oder verschieden sind, sind größer oder gleich 1, und wenn das eine oder andere größer als 1 ist, sind die sich wiederholenden Einheiten identisch oder verschieden,

ein Verfahren, worin in Kontakt gebracht werden:

- ein ethylenisch ungesättigtes Monomer der Formel $CYY' (= CW - CW')_a = CH_2$,
- eine Vorläuferverbindung der allgemeinen Formel (II):

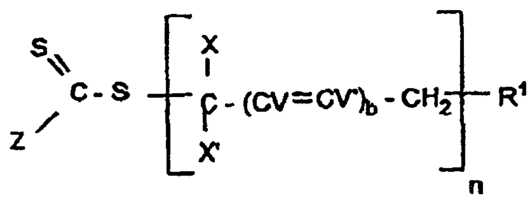

(II)

- ein Initiator für eine radikalartige Polymerisation.

2. Verfahren gemäß Anspruch 1, **dadurch gekennzeichnet, dass** das ethylenisch ungesättigte Monomer ausgewählt wird aus Styrol oder dessen Derivate, Butadien, Chloropren, (Meth)acrylsäureestern, Vinylcarbonsäureestern, Vinylaminamiden, Amiden von ungesättigten Carbonsäuren und Vinylnitrilen.

3. Verfahren gemäß einem der vorhergehenden Ansprüche, **dadurch gekennzeichnet, dass** $R^1$ darstellt:

   - eine Gruppe der Formel $CR^{12}R^{13}R^{14}$, worin:

     - $R^{12}$, $R^{13}$ und $R^{14}$ die wie vorstehend angegebenen Gruppen (i), (ii) oder (iii) darstellen, oder
     - $R^{12} = R^{13} = H$ und $R^{14}$ eine Aryl-, Alken- oder Alkyn-Gruppe ist, oder

   - eine Gruppe $-COR^{15}$, worin $R^{15}$ eine Gruppe (i), (ii) oder (iii) darstellt.

4. Verfahren gemäß dem vorhergehenden Anspruch, **dadurch gekennzeichnet, dass** $R^1$ eine Gruppe darstellt, die aus den Gruppen ausgewählt wird:

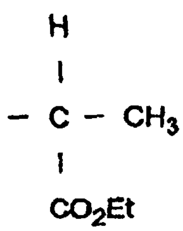

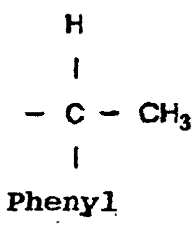

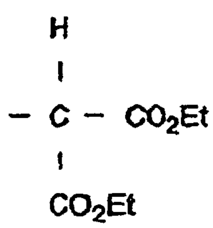

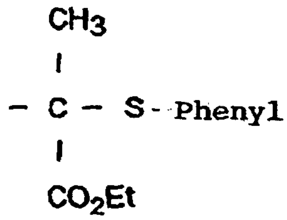

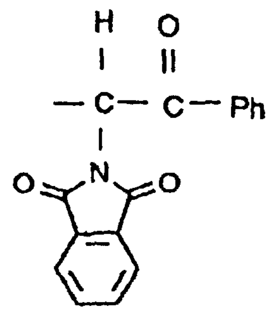

5. Verfahren gemäß einem der vorhergehenden Ansprüche, **dadurch gekennzeichnet, dass** die Vorläuferverbindung der allgemeinen Formel (II) ein Polymer ist, und dass das Polymer aus der radikalartigen Polymerisation eines ethylenisch ungesättigten Monomers der Formel CXX' (= CV - CV')$_b$ = $CH_2$ stammt, während der das Monomer mit einem Initiator für eine radikalartige Polymerisation und einer Verbindung der allgemeinen Formel (III) in Kontakt gebracht wird:

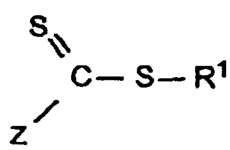 (III)

wobei p zwischen 2 und 10 liegt.

6. Verfahren zur Herstellung durch radikalartige Polymerisation von Homopolymeren oder Blockcopolymeren, worin die Struktur "mehrarmig" oder hyperverzweigt ist, bei dem in Kontakt gebracht werden:

- ein ethylenisch ungesättigtes Monomer der Formel CYY' (= CW - CW')$_a$ = $CH_2$,
- eine Vorläuferverbindung der allgemeinen Formel (II):

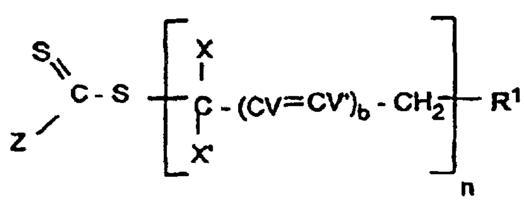 (II)

- ein Initiator für eine radikalartige Polymerisation,
wobei die Vorläuferverbindung der allgemeinen Formel (II) durch radikalartige Polymerisationsreaktion eines ethylenisch ungesättigten Momomers der Formel CXX' (= CV - CV')$_b$ = $CH_2$ erhalten wird, während der das Monomer mit einem Initiator für eine radikalartige Polymerisation und einer Verbindung der allgemeinen Formel (IV) oder (V) in Kontakt gebracht wird:

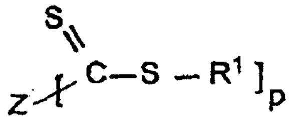

(IV)

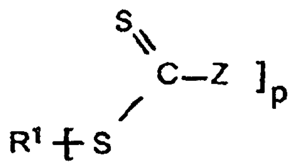

(V)

- wobei p zwischen 2 und 10 liegt,
- Z eine Alken- oder Alkyn-Gruppe ist, gegebenenfalls substituiert mit:

  - einer Alkyl-, Acyl-, Aryl-, Alken- oder Alkyn-Gruppe, gegebenenfalls substituiert,
  - einem gesättigten oder ungesättigten Kohlenstoffring, gegebenenfalls substituiert oder aromatisch,
  - einem gesättigten oder ungesättigten Heterocyclus, gegebenenfalls substituiert,
  - Alkoxycarbonyl- oder Aryloxycarbonyl- (-COOR'), Carboxy- (-COOH), Acyloxy- ($-O_2CR'$), Carbamoyl- ($CONR'_2$), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidino-, Hydroxy- (OH), Amino- ($-NR'_2$), Halogen-, Allyl-, Epoxy-, Alkoxy- (-OR'), S-Alkyl-, S-Aryl-, Organosilyl-Gruppen,
  - Gruppen, die eine hydrophile oder ionische Eigenschaft aufweisen wie die alkalischen Carbonsäuresalze, die alkalischen Sulfonsäuresalze, die Polyalkylenoxidketten (POE, POP), die kationischen Substituenten (quaternäre Ammoniumsalze),

- $R^1$ darstellt:

  - eine Alkyl-, Acyl-, Aryl-, Alken- oder Alkyngruppe (i), gegebenenfalls substituiert, oder
  - einen gesättigten oder ungesättigten Kohlenstoffring (ii), gegebenenfalls substituiert oder aromatisch,
  - einen gesättigten oder ungesättigten Heterocyclus (iii), gegebenenfalls substituiert, wobei die Gruppen und Cyclen (i), (ii) und (iii) mit substituierten Phenylgruppen oder substituierten aromatischen Gruppen, mit Alkoxycarbonyl- oder Aryloxycarbonyl- (-COOR'), Carboxy- (-COOH), Acyloxy- ($-O_2CR'$), Carbamoyl - ($CONR'_2$), Cyano- (-CN), Alkylcarbonyl-, Alkylarylcarbonyl-, Arylcarbonyl-, Arylalkylcarbonyl-, Phthalimi-do-, Maleimido-, Succinimido-, Amidino-, Guanidino-, Hydroxy- (OH), Amino- ($-NR'_2$), Halogen-, Allyl-, Epoxy-, Alkoxy- (-OR'), S-Alkyl-, S-Aryl-, Organosilyl-Gruppen, mit Gruppen, die eine hydrophile oder ionische Eigenschaft aufweisen wie die alkalischen Carbonsäuresalze, die alkalischen Sulfonsäuresalze, die Polyalkylenoxidketten (POE, POP), die kationischen Substituenten (quaternäre Ammoniumsalze) substituiert sein können, R' eine Alkyl- oder Aryl-Gruppe darstellt,

- V, V', W und W', die gleich oder verschieden sind, H, eine Alkyl-Gruppe oder ein Halogen darstellen,
- X, X', Y und Y', die gleich oder verschieden sind, H, ein Halogen oder eine R"-, OR"-, OCOR"-, NHCOH-, OH-, $NH_2$-, NHR"-, $N(R")_2$-, $H_2N^+O^-$-, $(R")_2N^+O^-$-, NHCOR"-, $CO_2H$-, $CO_2R"$-, CN-, $CONH_2$-, CONHR"- oder CON $(R")_2$-Gruppe darstellen, worin R" ausgewählt ist aus den Alkyl-, Aryl-, Aralkyl-, Alkaryl-, Alken-, Organosilyl-Gruppen, gegebenenfalls perfluoriert und gegebenenfalls mit einer oder mehreren Carboxyl-, Epoxy-, Hydroxyl-, Alkoxy-, Amino-, Halogen- oder Sulfon-Gruppen substituiert;
- a und b, die gleich oder verschieden sind, weisen einen Wert von 0 oder 1 auf,
- n ist größer oder gleich 1.

**7.** Verfahren zur Herstellung von Blockpolymeren, **dadurch gekennzeichnet, dass** wenigstens einmal die Durchführung des Verfahrens gemäß einem der Ansprüche 1 bis 6 wiederholt wird, unter Verwendung von:

- anderen Monomeren als in der vorhergehenden Durchführung, und

- dem Blockpolymer, das aus der vorhergehenden Durchführung stammt, statt der Vorläuferverbindung der Formel (II).

**8.** Blockpolymer, das nach dem Verfahren gemäß einem der Ansprüche 1 bis 6 oder 7 erhalten werden kann.

**9.** Blockpolymer gemäß dem vorhergehenden Anspruch, **dadurch gekennzeichnet, dass** es einen Polydispersitätsindex von maximal 2 aufweist.

**10.** Blockpolymer gemäß dem vorhergehenden Anspruch, **dadurch gekennzeichnet, dass** es einen Polydispersitätsindex von maximal 1,5 aufweist.

**11.** Verfahren zur Herstellung von Blockpolymeren, durch radikalartige Polymerisation, in dem in einem ersten Schritt in Kontakt gebracht werden:

- ein ethylenisch ungesättigtes Monomer der Formel CXX' (= CV - CV')$_b$ = $CH_2$
- eine Verbindung der allgemeinen Formel (IIIA)

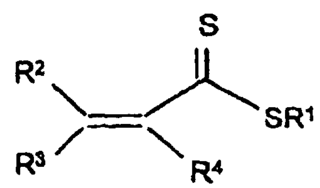

worin wenigstens $R^2$ oder $R^3$ eine $SR^1$-Gruppe darstellen, gleich oder verschieden, und
- ein Initiator für eine radikalartige Polymerisation,

anschließend wiederholt man wenigstens einmal die Durchführung des ersten Schritts unter Verwendung von:
- anderen Monomeren als im ersten Schritt, und
- dem Polymer, das aus der vorhergehenden Durchführung stammt, statt der Verbindung der Formel (IIIA).

**12.** Blockpolymer, das nach dem Verfahren gemäß Anspruch 11 erhalten werden kann.

**13.** Blockpolymer gemäß dem vorhergehenden Anspruch, **dadurch gekennzeichnet, dass** es einen Polydispersitätsindex von maximal 2 aufweist.

**14.** Blockpolymer gemäß dem vorhergehenden Anspruch, **dadurch gekennzeichnet, dass** es einen Polydispersitätsindex von maximal 1,5 aufweist.

**15.** Polymer, das nach dem Verfahren erhalten werden kann, das aus dem Inkontaktbringen eines ethylenisch ungesättigten Monomers der Formel CXX' (= CV - CV')$_b$ = $CH_2$, eines Initiators für eine radikalartige Polymerisation und einer Verbindung der Formel (III), (IV) oder (V) besteht.

**Claims**

**1.** A process for preparing block polymers with the following general formula (I) by radical polymerization:

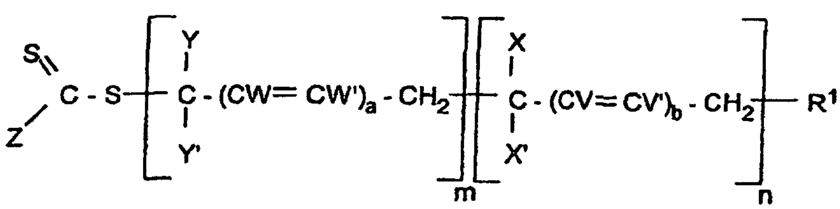
(I)

in which:

- Z is an alkene or alkyne radical, optionally substituted with:

  o an alkyl, acyl, aryl, alkene or alkyne group, optionally substituted;
  o a saturated or unsaturated carbon-containing cycle, optionally substituted or aromatic;
  o a saturated or unsaturated heterocycle, optionally substituted;
  o alkoxycarbonyl or aryloxycarbonyl (-COOR'), carboxyl (-COOH), acyloxy ($-O_2CR'$), carbamoyl ($-CONR'_2$), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino ($-NR'_2$), halogen, allyl, epoxy, alkoxy (-OR'), S-alkyl, S-aryl or organosilyl groups;
  o groups with a hydrophilic or ionic nature such as alkali salts of carboxylic acids, alkali salts of sulphonic acid, polyoxyalkyene chains (POE, POP) or cationic substituents (quaternary ammonium salts);

- $R^1$ represents:

  o an alkyl, acyl, aryl, alkene or alkyne group (i), optionally substituted; or
  o a saturated or unsaturated carbon-containing cycle (ii), optionally substituted or aromatic; or
  o a saturated or unsaturated heterocycle (iii), optionally substituted;
  said groups and cycles (i), (ii) and (iii) may be substituted with substituted phenyl groups or substituted aromatic groups, with groups: alkoxycarbonyl or aryloxycarbonyl (-COOR'), carboxyl (-COOH), acyloxy ($-O_2CR'$), carbamoyl ($-CONR'_2$), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino ($-NR'_2$), halogen, allyl, epoxy, alkoxy (-OR'), S-alkyl, S-aryl or organosilyl, groups with a hydrophilic or ionic nature such as alkali salts of carboxylic acids, alkali salts of sulphonic acid, polyoxyalkyene chains (POE, POP) or cationic substituents (quaternary ammonium salts);
  R' representing an alkyl or aryl group;

- V, V', W and W', which may be identical or different, represent: H, an alkyl group or a halogen;
- X, X', Y, Y', which may be identical or different, represent H, a halogen, or a group R", OR", OCOR", NHCOH, OH, $NH_2$, NHR", $N(R")_2$, $N(R")_2$, $H_2N^+O^-$, $(R")_2N^+O^-$, NHCOR", $CO_2H$, $CO_2R"$, CN, $CONH_2$, CONHR" or $CON(R")_2$, in which R" is selected from alkyl, aryl, aralkyl, alkaryl, alkene, organosilyl groups, optionally perfluorinated and optionally substituted with one or more carboxyl, epoxy, hydroxyl, alkoxy, amino, halogen or sulphonic groups;
- a and b, which may be identical or different, are equal to 0 or 1;
- m and n, which may be identical or different, are equal to 1 or more, and when one or the other is more than 1, the individual repeating units are identical or different;

in which process the following are brought into contact:

- an ethylenically unsaturated monomer with formula: $CYY'(=CW-CW')_a=CH_2$;
- a precursor compound with general formula (II):

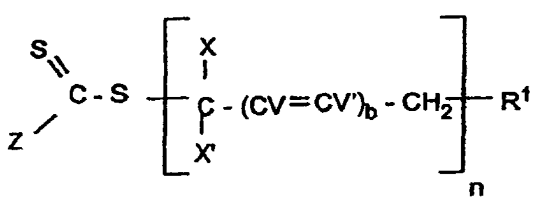

(II)

- a radical polymerization initiator.

2. A process according to claim 1, **characterized in that** the ethylenically unsaturated monomer is selected from: styrene or its derivatives, butadiene, chloroprene, (meth)acrylic esters, carboxylic acid vinyl esters, vinylamine amides, unsaturated carboxylic acid amides and vinyl nitriles.

**3.** A process according to any one of the preceding claims, **characterized in that** $R^1$ represents:

- a group with formula $CR^{12}R^{13}R^{14}$, in which:
  - $R^{12}$, $R^{13}$ and $R^{14}$ represent groups (i), (ii) or (iii) as defined above; or
  - $R^{12} = R^{13} = H$ and $R^{14}$ is an aryl, alkene or alkyne group; or
  - a $-COR^{15}$ group in which $R^{15}$ represents a group (i), (ii) or (iii).

**4.** A process according to the preceding claim, **characterized in that** $R^1$ is a group selected from the following groups:

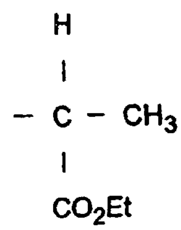

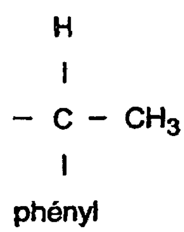

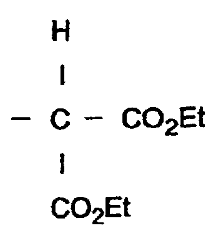

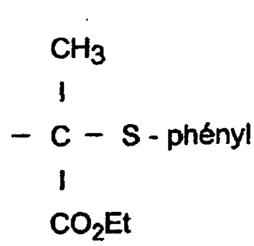

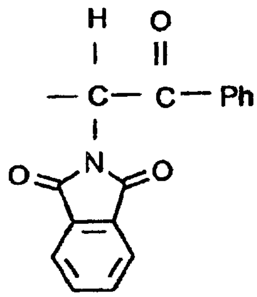

5. A process according to any one of the preceding claims, **characterized in that** the precursor compound with general formula (II) is a polymer, and **in that** said polymer derives from radical polymerization of an ethylenically unsaturated monomer with formula: $CXX'(=CV-CV')_b-CH_2$ during which said monomer is brought into contact with a radical polymerization initiator and a compound with general formula (III):

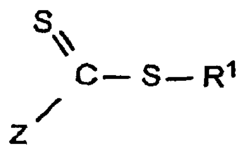 (III)

p being in the range 2 to 10.

6. A process for preparing homopolymers or block copolymers by radical polymerization and with a "multi-branched" or hyperbranched structure in which the following are brought into contact:

- an ethylenically unsaturated monomer with formula: $CYY'(=CW-CW')_a=CH_2$;
- a precursor compound with general formula (II):

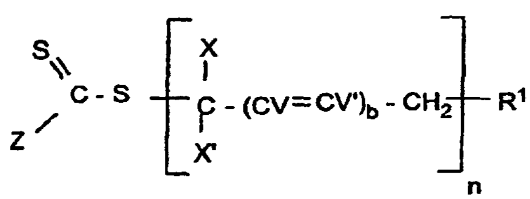 (II)

- a radical polymerization initiator;

the precursor compound with general formula (II) being obtained by radical polymerization of an ethylenically unsaturated monomer with formula: $CXX'(=CV-CV')_b=CH_2$ during which said monomer is brought into contact with a radical polymerization initiator, and a compound with general formula (IV) or (V):

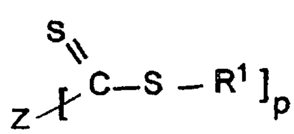 (IV)

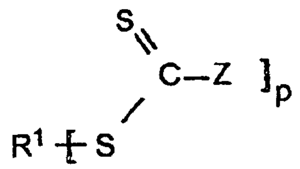

(V)

in which:

- p is in the range 2 to 10;
- Z is an alkene or alkyne radical optionally substituted with:
    - an alkyl, acyl, aryl, alkene or alkyne group, optionally substituted;
    - a saturated or unsaturated carbon-containing cycle, optionally substituted or aromatic;
    - a saturated or unsaturated heterocycle, optionally substituted;
    - alkoxycarbonyl or aryloxycarbonyl (-COOR'), carboxyl (-COOH), acyloxy (-$O_2CR'$), carbamoyl (-$CONR'_2$), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-$NR'_2$), halogen, allyl, epoxy, alkoxy (-OR'), S-alkyl, S-aryl or organosilyl groups;
    - groups with a hydrophilic or ionic nature such as alkali salts of carboxylic acids, alkali salts of sulphonic acid, polyoxyalkyene chains (POE, POP) or cationic substituents (quaternary ammonium salts);
- $R^1$ represents:
    - an alkyl, acyl, aryl, alkene or alkyne group (i), optionally substituted; or
    - a saturated or unsaturated carbon-containing cycle (ii), optionally substituted or aromatic; or
    - a saturated or unsaturated heterocycle (iii), optionally substituted;

  said groups and cycles (i), (ii) and (iii) may be substituted with substituted phenyl groups or substituted aromatic groups with the following groups: alkoxycarbonyl or aryloxycarbonyl (-COOR'), carboxyl (-COOH), acyloxy (-$O_2CR'$), carbamoyl (-$CONR'_2$), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-$NR'_2$), halogen, allyl, epoxy, alkoxy (-OR'), S-alkyl, S-aryl or organosilyl, groups with a hydrophilic or ionic nature such as alkali salts of carboxylic acids, alkali salts of sulphonic acid, polyoxyalkyene chains (POE, POP), or cationic substituents (quatemary ammonium salts);
  R' representing an alkyl or aryl group;
- V, V', W and W', which may be identical or different, represent: H, an alkyl group or a halogen;
- X, X', Y, Y', which may be identical or different, represent H, a halogen, or a group R", OR", OCOR", NHCOH, OH, $NH_2$, NHR", $N(R")_2$, $N(R")_2$, $H_2N^+O^-$, $(R")_2N^+O^-$, NHCOR", $CO_2H$, $CO_2R"$, CN, $CONH_2$, CONHR" or CON$(R")_2$, in which R" is selected from alkyl, aryl, aralkyl, alkaryl, alkene or organosilyl groups, optionally perfluorinated and optionally substituted with one or more carboxyl, epoxy, hydroxyl, alkoxy, amino, halogen or sulphonic groups;
- a and b, identical or different, are equal to 0 or 1;
- n is 1 or more.

7. A process for preparing block polymers, **characterized in that** the process according to one of claims 1 to 6 is repeated at least once using:

- monomers that are different from the preceding implementation; and
- the block polymer issuing from the preceding implementation in place of the precursor compound with formula (II).

8. A block polymer that can be obtained by the process according to any one of claims 1 to 6 or 7.

9. A block polymer according to the preceding claim, **characterized in that** it has a polydispersity index of at most 2.

**10.** A block polymer according to the preceding claim, **characterized in that** it has a polydispersity index of at most 1.5.

**11.** A process for preparing block polymers by radical polymerization in which, in a first step, the following are brought into contact:

- an ethylenically unsaturated monomer with formula: $CXX'(=CV-CV')_b=CH_2$;
- a compound with general formula (IIIA):

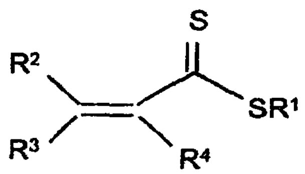

in which at least $R^2$ or $R^3$ represent a group $SR^1$, identical or different; and
- a radical polymerization initiator;

then the first step is repeated at least once using:
- monomers that are different from the first step; and
- the block polymer issuing from the preceding implementation in place of the compound with formula (IIIA).

**12.** A block polymer capable of being obtained by the process of claim 11.

**13.** A block polymer according to the preceding claim, **characterized in that** it has a polydispersity index of at most 2.

**14.** A block polymer according to the preceding claim, **characterized in that** it has a polydispersity index of at most 1.5.

**15.** A polymer that can be obtained by the process consisting of bringing an ethylenically unsaturated monomer with formula: $CXX'(=CV-CV')_b=CH_2$ into contact with a radical polymerization initiator and a compound with formula (III), (IV) or (V).